**Europäisches Patentamt**

**European Patent Office**

**Office européen des brevets**

(19)

(11) Publication number: **0 136 760**

**A2**

(12)

# EUROPEAN PATENT APPLICATION

(21) Application number: **84201372.4**

(22) Date of filing: **26.09.84**

(51) Int. Cl.⁴: **D 06 H 7/02**

(30) Priority: **05.10.83 BE 211651**

(43) Date of publication of application:
**10.04.85 Bulletin 85/15**

(84) Designated Contracting States:
**DE FR GB IT NL**

(71) Applicant: **Vermeiren, Louis**
**Hazelaardreef 1**
**B-2128 Brecht(BE)**

(72) Inventor: **Vermeiren, Louis**
**Hazelaardreef 1**
**B-2128 Brecht(BE)**

(74) Representative: **Pieraerts, Jacques et al,**
**Bureau Gevers S.A. rue de Livourne 7, Bte. 1**
**B-1050 Bruxelles(BE)**

(54) Device for cutting cross-wise textile products woven to one other.

(57) There is described a device for cutting along the cross-wise direction textile products woven to one another, which comprises means which convert the area where the cutting line is to be made into an image with a video camera (8), and depending on the received signals, modify the movement of the textile product relative to a cutting tool (9).

FIG. 1

## Device for cutting cross-wise textile products woven to one another

This invention relates to a device for cutting along the cross-wise direction, textile products woven to one another, which have a pattern or colour contrasts which lie symmetrically relative to the cutting line along which said textile products are to be cut from one another, that is upstream and downstream of the cutting line to be obtained, when considering the movement direction of said textile products through the device.

The invention is to be applied for cutting along the weft two textile products following one another and woven one after the other on a loom, which have relative to the cutting line to be obtained, a symmetrical mirror pattern, such as handkerchiefs, towels, carpets, and textile products which have a colour pattern or also a relief pattern.

The object of the invention is indeed to provide a device whereby the cutting line between two textile products may be obtained in an original way along the weft of said products.

When weaving carpets among others, there do indeed appear differences in the base fabric, in such a way that machine cutting between two woven carpets can not be performed. Said differences in the base fabric may notably result from a finishing operation which said fabric has undergone.

The invention has also for object to provide a device which makes it possible to perform said cutting operation completely automatically.

To obtain such a result according to the invention, the device according to the invention comprises at least the following means:

1°) A video camera (8) which forms an image of the area (10) on either side of the cutting line to be made and converts said image into electronic signals, possibly the image which is present downstream of said cutting line when the textile product which passes through the device is the last one in a series of textile products with a determined pattern or determined colour contrasts;

2°) Means for converting said electronic signals into digital values (13);

3°) An electronic memory which stores said electronic signals (13) converted into digital values;

4°) A processor (14) for treating the signals as defined in 3°);

5°) Means for comparing said electronically-stored signals with the middle of the image as defined in 1°) and for comparing both halves thereof with one another, possibly for comparing the electronic signals converted from the image which lies downstream of the cutting line to be obtained, with the corresponding signals stored in said memory originating from the preceding image which also lies downstream of the last-made cutting line;

6°) Means for feeding a correction signal to a control unit (17) which changes the position of the textile product, that is of the cutting line to be obtained thereon, relative to a cutting tool (9) coupled to said video camera, notably by acting on the revolution direction of a drive roller (5) whereover hangs said textile product.

In a preferred embodiment of the invention, the textile product to be cut is lead over a roller set in which the one roller acts as drive roller and is rotated in the one or the other direction by said control unit, in such a way that the cutting line to be obtained always lies at an equal distance from said symmetrical colour pattern, due to the fed correction signal resulting from the comparison of the stored electronic signals with the image taken by said camera.

Other details and advantages of the invention will stand out from the following description, given by way of non limitative example and with reference to the accompanying drawings, in which:

Figure 1 is a diagrammatic side view of the device according to the invention.

Figure 2 diagrammatically shows the arrangement of essential elements from the device according to the invention.

Figure 3 is a diagrammatric showing of the sequence of some essential operations made possible by the device according to the invention.

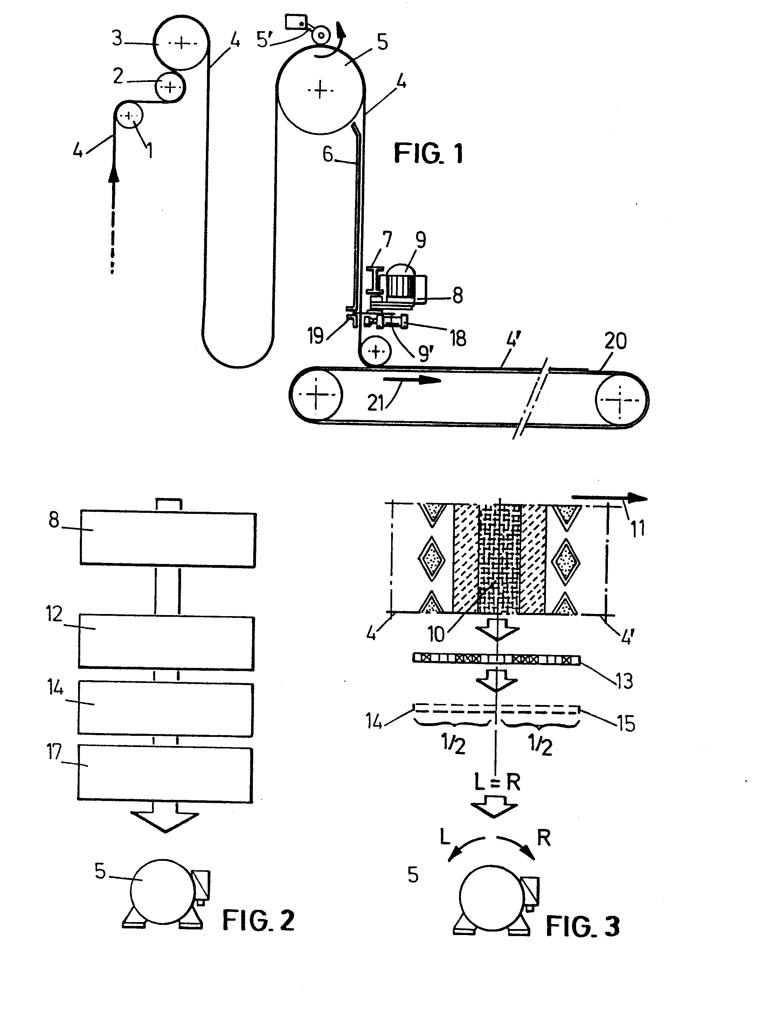

The device as shown in figure 1 comprises a set of horizontal rollers 1, 2, 3 between which a carpet 4 is lead. The device further comprises a driving roller 5. Between said last roller 3 and driving roller 5, a loop is formed in the carpet. The wording "carpet" is actually used to refer to a series of carpets woven to one another.

Past roller 5, the carpet is lead vertically against a plate 6.

By means of a motor not shown, the driving roller 5 may be rotated rightwards or leftwards, which means that with a rotation to the left (fig. 1), the carpet 4 is raised in the same proportion, and with a rotation to the right, the carpet is lowered over a distance corresponding to the extent of said rotation.

A sensor 5' is resiliently pressed on the driving roller 5, actually on the carpet 4 bearing on said driving roller. Said sensor senses the "open" area between two succeeding woven carpets. With the recording of said "open" or unwoven area, the sensor operates a counter which slows down the revolution movement of the driving roller 5 to bring the cutting line to be made substantially level with the sensing apparatus.

The sensing apparatus is coupled to the cutting tool and is moved along a small beam 7 cross-wise through the area between two carpets to be cut away from one another.

The video camera from the sensing apparatus is shown diagrammatically in 8, and the cutting tool which is actually comprised of a cutting disk 9', is shown in 9.

The above-defined sensing apparatus comprises mainly the following means: a video camera 8, for example a CCD (capacitive-coupled device) type. The video camera which images stepwise the whole area between those ends facing one another of the pattern of two carpets following one another, forms the image of the "cutting line area". Said signals picked-up by the video camera are converted into electronic signals.

In figure 3, two carpets following one another are shown in 4 and 4', and the area between said carpets is shown in 10. The direction said carpets move along is shown by arrow 11.

The signals picked-up by the video camera are converted into digital values, by an "interface card" 12 for example. The continuous input electronic signals are converted into digital values 13 and shifted to a memory where said digital values are stored as a complete image.

By means of a processor 14, said digital values are treated. The image stored in the electronic memory is then compared with the middle of the camera image, while both halves 15 and 16 are compared with one another. The processor 14 derives from said comparing, a correction signal which is fed to a control unit 17.

Said correction signal is amplified by conventional means and converted into a voltage which causes the driving roller 5 to rotate in the required direction (leftwards or rightwards). As already explained hereinabove, the leftwards or rightwards rotating of the driving roller 5 results in the raising or lowering of carpet 4 along the vertical plate 6.

As the carpet 4 moves in the height and thus performs relative to the cutting tool, a relative motion, it is possible to obtain with certainty a cutting line which lies at an accurate distance from the outermost ends of the symmetrically-provided pattern.

Directly after cutting both carpets in an accurate way along the weft from one another, that portion of a carpet lying directly underneath the cutting tool, is retained clamped against a small cross beam 19 by pneumatic means, for example by using small air pressure cylinders 18. After both carpets are completely cut away from one another, the action of the air pressure cylinders 18 is cut off, and the carpet 4' falls down on the conveying belt 20 the movement direction of the upper run of which is shown by arrow 21. By using an air jet, the carpet 4' is pressed against the conveying belt 20.

It is clear from the above description of the device according to the invention, that in a very original way, in that cutting area between two textile products following one ano other, said products may be cut by a cutting tool which follows the accurate profile of a weft in the base fabric.

It must be understood that the invention is in no way limited to the above embodiments and that many changes may be brought thereto without departing from the scope of the invention as defined by the appended claims.

For instance, the sensor 5' may act not only on the thickness differential between two textile products (sponge fabric, carpets, etc.), but it may also be designed for measuring a spacing between two areas where a cutting line should be made.

It is also clear that components might be replaced by other ones which fulfill an identical technical function. This is also valid for the rotating cutting tool, the function of which might be insured by a conventional knife.

CLAIMS

1. Device for cutting along the cross-wise direction textile products woven to one another, which have a pattern or colour contrasts which lie symmetrically relative to the cutting line along which said textile products should be cut away from one another, that is upstream and downstream of the cutting line to be made when considering the movement direction of the textile products through said device, characterized in that it comprises at least the following means:

1°) A video camera (8) which forms an image of the area (10) on either side of the cutting line to be made and converts said image into electronic signals, possibly the image which is present downstream of said cutting line when the textile product which passes through the device is the last one in a series of textile products with a determined pattern or determined colour contrasts;

2°) Means for converting said electronic signals into digital values (13);

3°) An electronic memory which stores said electronic signals (13) converted into digital values;

4°) A processor (14) for treating the signals as defined in 3°);

5°) Means for comparing said electronically-stored signals with the middle of the image as defined in 1°) and for comparing both halves thereof with one another, possibly for comparing the electronic signals converted from the image which lies downstream of the cutting line to be obtained, with the corresponding signals stored in said memory originating from the preceding image which also lies downstream of the last-made cutting line;

6°) Means for feeding a correction signal to a control unit (17) which changes the position of the textile product, that is of the cutting line to be obtained thereon, relative to a cutting tool (9) coupled to said video camera, notably by acting on the revolution direction of a drive roller (5) whereover hangs said textile product.

2. Device as defined in claim 1, characterized in that the textile product to be cut is lead over a roller set (1,2,3) and a driving roller (5), said driving roller being rotated in the one or the other direction by said control unit, in such a way that the cutting line to be obtained always lies at an equal distance from said symmetrical colour pattern, due to the fed correction signal resulting from the comparison of the stored electronic signals with the middle of the image taken by said video camera (8).

3. Device as defined in claim 2, characterized in that said textile product is lead over horizontal cylinders, and a loop is formed between the roller (3) from a first roller set (1,2,3) and said driving roller (5), and in that against the textile product lead over said driving roller (5), particularly a carpet (4), a sensor (5') is retained pressed, which records that area where the cutting line between two textile products is to be made, in such a way that the position of the cutting line to be made relative to a cutting tool is determined therefrom by approximation.

4. Device as defined in claim 3, characterized in that said cutting tool is fitted with a rotating cutting disk (9').

5. Device as defined in any one of claims 1-4, characterized in that the textile product, after said driving roller (5), as considered along the movement direction of the textile products to be cut, is lead vertically against a plate (6), which has level with the cutting line to be made, a horizontal break.

6. Device as defined in any one of claims 1-5, characterized in that said cutting tool (9) and said video camera (8) are moved along a horizontally-set rail (7).

7. Device as defined in any one of claims 1-6, characterized in that the portion of the textile products which, when considering the movement direction thereof relative to the device, lies downstream of the obtained cutting line, is retained in position by clamping means.

8. Device as defined in claim 7, characterized in that said clamping means are formed by air pressure cylinders (18) which are arranged along and underneath said cutting line, and retain the cut-through textile product against a small crossbeam (19).

9. Device as defined in any one of claims 1-8, characterized in that the cut-away product, after being released by said clamping members, is discharged by a horizontally-moving conveying belt (20).

10. Device as defined in claim 9, characterized in that said cut-away textile product is retained pressed pneumatically, for example by an air jet, against said conveying belt (20).

FIG. 1

FIG. 2

FIG. 3